# EUROPÄISCHE PATENTSCHRIFT

(11) **EP 0 561 021 B1**
(45) Veröffentlichungstag und Bekanntmachung des Hinweises auf die Patenterteilung: **29.01.1997**
(21) Anmeldenummer: 92104690.0
(22) Anmeldetag: 18.03.1992
(51) Int. Cl.: G01L 1/22

(54) **Kraftmesseinrichtung**
Force measuring device
Dispositif de mesure de force

(43) Veröffentlichungstag der Anmeldung: 22.09.1993
(73) Patentinhaber: HOTTINGER BALDWIN MESSTECHNIK GMBH, D-64201 Darmstadt (DE)
(72) Erfinder: Schröder, Markus, W-6101 Rossdorf (DE); Schlachter, Werner, W-6100 Darmstadt (DE)
(74) Vertreter: Brandt, Ernst-Ulrich, Dipl.-Phys., Dipl.-Ing.

(56) Entgegenhaltungen:
- EP-A- 0 351 006
- DE-A- 3 347 505
- DE-A- 4 009 019

## Beschreibung

Die Erfindung betrifft eine Kraftmeßeinrichtung mit einer rotationssymmetrischen, plattenförmigen Meßfeder mit zentraler Krafteinleitungsstelle, deren Plattenebene sich im wesentlichen senkrecht zur eingeleiteten Kraft erstreckt, und die in einem im wesentlichen koaxial zur Kraftrichtung verlaufenden ringförmigen Stützkörper, der mindestens eine von der Meßfeder abgewandte Kraftableitungsfläche aufweist, eingespannt ist, und mit Meßwertgebern, welche die Verformung der Meßfeder messen.

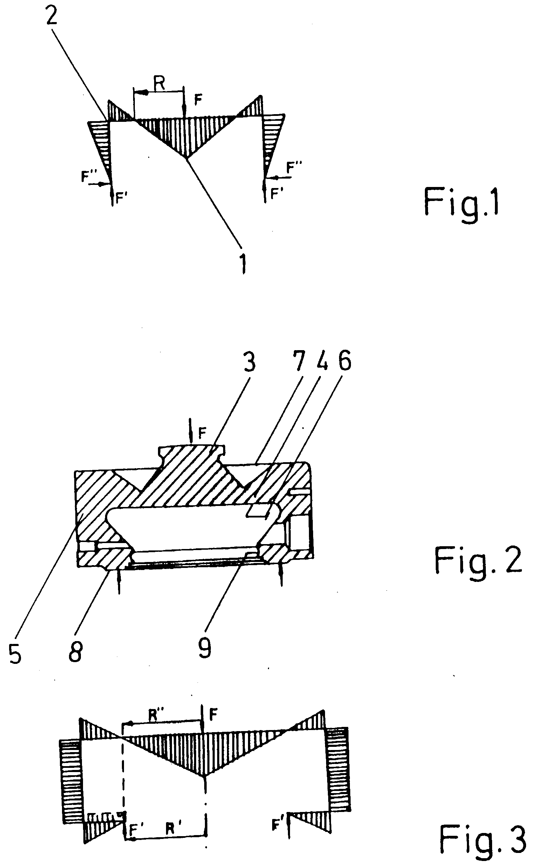

Eine solche Kraftmeßeinrichtung ist beispielsweise aus der DE 33 47 505 A 1 bekannt, bei welcher der Stützkörper als senkrechter Hohlzylinder ausgebildet ist. Die Kraftableitungsfläche liegt daher senkrecht unter der Einspannstelle der Meßfeder. Dies führt, wie im folgenden anhand des mechanischen Ersatzmodelles in Figur 1 erläutert wird, zu Problemen in der Reproduzierbarkeit der Meßergebnisse sowie zu Beeinträchtigungen der Meßgenauigkeit.

In das mechanische Ersatzmodell von Figur 1 ist der Verlauf des Biegemomentes entlang eines Längsschnittes durch die bekannte Meßeinrichtung dargestellt. Analog zum beidseitig eingespannten und zentral mit einer Einzellast beaufschlagten Biegebalken verläuft das Biegemoment entlang der Meßfeder selbst mit einem Maximum an der Krafteinleitungsstelle 1, einem Nulldurchgang beim Radius R und einem Einspannmoment an der Einspannstelle 2. Das Einspannmoment wird an dieser Stelle auf den Stützkörper übertragen und es ist aus Gründen des mechanischen Gleichgewichts eine horizontale Reaktionskraftkomponente F'' an der Kraftableitungsstelle notwendig, welche sich letztlich aus der Reaktionskraft F' und dem Reibungskoeffizienten an dieser Stelle ergibt.

Unterschiedliche Reibungskoeffizienten oder Unebenheiten an der Kraftableitungsfläche oder an der ihr zugeordneten Gegenfläche führen daher zu Hysteresefehlern und somit zu einer schlechten Reproduzierbarkeit des Kennwertes der Meßeinrichtung bzw. des Meßergebnisses. Bei bekannten Meßeinrichtungen muß daher ein sehr hoher Aufwand bezüglich der Genauigkeit und Gleichmäßigkeit der Aufstandsfläche bzw. der Kontaktfläche im Bereich der Kraftableitung betrieben werden. Zumal auch das Anbringen von Zwischenplatten zur Kraftableitung keine befriedigende Lösung bringt.

Aus der EP 351006 A2 ist ein Kraftaufnehmer bekannt, bei dem unterhalb von einem ringförmigen Stützkörper ein federelastischer Boden vorgesehen ist, der wiederum auf einem rohrförmigen zentralen Auflagestutzen abgestützt ist. Ein solcher Aufnehmer ist zum einen mit hohem Fertigungsaufwand verbunden, und stellt zudem eine relativ instabile Anordnung dar.

Der Erfindung liegt daher die Aufgabe zugrunde, auf einfache und kostengünstige Weise eine Kraftmeßeinrichtung eingangs beschriebener Art zu schaffen, welche sich durch eine nahezu vollkommene Hysteresefreiheit auszeichnet und die unabhängig von der Aufstandsfläche bzw. von den Einbaubedingungen ein hochgenaues Messen ermöglicht.

Diese Aufgabe wird erfindungsgemäß dadurch gelöst, daß die Kraftableitungsfläche gegenüber der Einspannstelle der Meßfeder am Stützkörper radial innenliegend angeordnet ist, und daß die Kraftableitungsfläche in dem radialen Bereich vorgesehen ist, in welchem der Vorzeichenwechsel des Biegemomentes der Meßfeder erfolgt. Auf diese Weise kann das am Stützkörper angreifende Einspannmoment komplett durch vertikale, d. h. parallel zur Meßkraft verlaufende Kraftkomponenten, kompensiert werden.

Dadurch kann eine absolute Unabhängigkeit von den Reibungsbedingungen an der Kraftableitungsstelle erreicht werden. In diesem Fall treten an der Kraftableitungstelle überhaupt keine radialen Reaktionskräft mehr auf.

Eine bevorzugte Ausführungsform der Erfindung, die bei geringem Bearbeitungsaufwand ein hysteresefreies Messen ermöglicht, sieht vor, daß die Kraftableitungsfläche gegenüber der Einspannstelle der Meßfeder am Stützkörper radial innenliegend angeordnet ist, und daß die Innenseite des Stützkörpers eine konische Hinterschneidung aufweist.

Eine bevorzugte Ausführungsform der Erfindung, die sich durch niedrigen Herstellungsaufwand auszeichnet, sieht vor, daß die Kraftableitungsfläche als ringförmiger Bund ausgebildet ist. Bei einer weiteren Ausführungsform der Erfindung ist die Meßfeder an ihrer von der Kraftableitungsfläche abgewandten Stirnseite mit einer konzentrischen Ringnut versehen, um einen genau definierten und sprungartigen Vorzeichenwechsel in der radialen Dehnung zu erhalten. Durch die an der Außenkontur der Meßeinrichtung vorgesehenen Ringnut läßt sich auf der Innenseite der Meßfeder die plane Kontur beibehalten, wodurch sich eine besonders gute Möglichkeit zur exakten Applikation der Meßwertgeber auf der der Ringnut gegenüberliegenden Seite der Meßfeder, das heißt im geschützten Innenraum, ergibt.

Zur Gewährleistung hoher Meßsicherheit und hoher Auflösung sieht eine weitere Ausführungsform der Erfindung vor, daß die Meßwertgeber als Dehnungsmeßstreifen ausgeführt sind.

Weitere vorteilhafte Merkmale sowie die Funktion der Erfindung ergeben sich aus der nachstehenden Beschreibung eines Ausführungsbeispieles als Wägezelle anhand der Zeichnungen. Hierzu zeigt Figur 2 einen Längsschnitt durch eine erfindungsgemäße Kraftmeßeinrichtung und Figur 3 ein mechanisches Ersatzmodell hierfür.

Die erfindungsgemäße Kraftmeßeinrichung besitzt einen Lasteinleitungsknopf 3, der zentral an der Meßfeder 4 ausgebildet ist. Die Meßfeder 4 ist als kreisplattenförmige Membrane ausgeführt und einstückig mit dem Stützkörper 5 ausgebildet. Der Stützkörper 5 besitzt eine zylinderförmige Außenkontur, während sein Innenradius zur Meßfeder 4 hin kontinuierlich zunimmt. Der Winkel zwischen der konischen Innenwand des Stützkörpers 5 und der vom Lasteinleitungsknopf 3 abgewandten Stirnseite 6 der Meßfeder 4, in welche sie abgerundet übergeht, beträgt ca. 50°.

Die Stirnfläche 6 ist als plane Ebene ausgebildet, die sich hervorragend zur Applikation von Dehnungsmeßstreifen eignet. Gegenüberliegend von der Stirnseite 6 ist die Meßfeder 4 mit einer Ringnut 7 versehen, die konzentrisch zum Lasteinleitungsknopf 3 verläuft, und die einen dreieckförmigen Querschnitt aufweist.

Diese Ringnut bewirkt einen exakt definierten und sprungartigen Nulldurchgang der radialen Dehnung der Meßfeder, was ein exaktes Messen durch die Dehnungsmeßstreifen begünstigt.

Am der Meßfeder 4 gegenüberliegenden Ende des Stützkörpers 5 ist die Kraftableitungsfläche als ringförmiger Bund 8 ausgebildet. Dieser Bund 8 ist gegenüber der Außenkontur des Stützkörpers 5 deutlich nach Innen abgesetzt und zumindest eine Teilfläche von ihm befindet sich unterhalb der Stirnfläche 6, so daß - wie insbesondere aus Figur 3 ersichtlich ist - eine nochmalige Umlenkung des Einspannmomentes, nämlich wieder in die horizontale Ebene, erfolgt.

Der Bund 8 umgibt eine zentrale Öffnung 9, die nach Montage der Dehnungsmeßstreifen, beispielsweise durch einen Deckel, verschließbar ist. Zwei radial durch den Stützkörper 5 verlaufende Querbohrungen dienen als Kabeldurchführungen.

Figur 3 verdeutlicht nochmals die Mechanik der Struktur der Kraftmeßeinrichtung. Im Bereich des Lasteinleitungsknopfes 3 erzeugt die aufgebrachte Kraft F ein Biegemomentenmaximum, welches zum Rand der Meßfeder 4 hin linear abfällt und dabei im Radius R sein Vorzeichen wechselt. An der Einspannstelle 2 wird das Einspannmoment auf den Stützkörper 5 übertragen. Dadurch, daß die Kraftableitungsfläche radial innerhalb der Einspannstelle 2 vorgesehen ist, steht zum Abbau des Einspannmomentes ein parallel zur Meßfeder 4 verlaufender Hebel zur Verfügung, wodurch das Einspannmoment allein aufgrund parallel zur Kraft F verlaufender axialer Kraftkomponenten aufgefangen werden kann. Somit ist die Kraftmessung unabhängig von den Reibungsbedingungen an der Kraftableitungsstelle. Im Idealfall ist der Radius R' des Bundes 8 gleich dem Radius R, an welchem der Vorzeichenwechsel des Biegemomentes stattfindet.

Es versteht sich von selbst, daß über die Kraftableitungsfläche auch Kräfte eingeleitet und über die Krafteinleitungsstelle auch Kräfte abgeleitet werden können. Allerdings ist die oben beschriebene Anordnung in der Praxis vorherrschend.

## Patentansprüche

1. Kraftmeßeinrichtung mit einer rotationssymmetrischen, plattenförmigen Meßfeder (4) mit zentraler Krafteinleitungsstelle (3), deren Plattenebene sich im wesentlichen senkrecht zur eingeleiteten Kraft erstreckt, und die in einem im wesentlichen koaxial zur Kraftrichtung verlaufenden ringförmigen Stützkörper (5), der mindestens eine von der Meßfeder (4) abgewandte Kraftableitungsfläche (8) aufweist, eingespannt ist, und mit Meßwertgebern, welche die Verformung der Meßfeder (4) messen, wobei die Kraftableitungsfläche (8) gegenüber der Einspannstelle (2) der Meßfeder (4) am Stützkörper (5) radial innenliegend angeordnet ist, und die Kraftableitungsfläche (8) in dem radialen Bereich vorgesehen ist, in welchem der Vorzeichenwechsel des Biegemomentes der Meßfeder (4) erfolgt.

2. Kraftmeßeinrichtung nach Anspruch 1, wobei die Innenseite des Stützkörpers (5) eine konische Hinterschneidung aufweist.

3. Kraftmeßeinrichtung nach einem der vorhergehenden Ansprüche, wobei die Kraftableitungsfläche als ringförmiger Bund (8) ausgebildet ist.

4. Kraftmeßeinrichtung nach einem der vorhergehenden Ansprüche, wobei die Meßfeder (4) an ihrer von der Kraftableitungsfläche (8) abgewandten Stirnseite mit einer konzentrischen Ringnut (7) versehen ist.

5. Kraftmeßeinrichtung nach einem der vorhergehenden Ansprüche, wobei die Meßwertgeber auf der der Ringnut (7) gegenüberliegenden Stirnseite (6) der Meßfeder (4) angeordnet sind.

6. Kraftmeßeinrichtung nach einem der vorhergehenden Ansprüche, wobei die Meßwertgeber als Dehnungsmeßstreifen ausgeführt sind.

## Claims

1. A dynamometer comprising a rotationally symmetric measuring spring (4) in the form of a plate with a central force application point (3), the plane of the plate being substantially perpendicular to the force applied, which spring is clamped into an annular supporting member (5) which extends substantially coaxially with the direction of the force and which has at least one force transmission surface (8) facing away from the spring (4), and comprising pick-ups which measure the deformation of the spring(4), wherein the force transmission surface (8) is arranged radially within the point (2) where the measuring spring (4) is clamped to the supporting member (5), and the force transmission surface (8) is provided in the radial region in which the flexural torque of the measuring spring (4) changes its sign.

2. The dynamometer of claim 1, wherein the interior of the supporting member (5) has a tapering undercut.

3. The dynamometer of either of the preceding claims, wherein the force transmission surface is in the form of an annular shoulder (8).

4. The dynamometer of any of the preceding claims, wherein the measuring spring (4) is provided with a concentric annular groove (7) in its face facing away from the force transmission surface (8).

5. The dynamometer of any of the preceding claims, wherein the pick-ups transmitters are arranged on the face (6) of the spring (4) opposite the annular groove (7).

6. The dynamometer of any of the preceding claims, wherein the pick-ups transmitters are in the form of strain gauges.

## Revendications

1. Dispositif de mesure de force comportant un ressort de mesure (4) en forme de plaque, présentant une symétrie de révolution, avec point d'introduction de force (3) central dont le plan de la plaque s'étend sensiblement perpendiculairement à la force introduite, et qui est serré dans un corps d'appui (5) annulaire, s'étendant sensiblement coaxialement à la direction de la force, qui présente au moins une surface de dérivation de force (8) tournée à l'opposé du ressort de mesure (4) et comportant des capteurs de valeurs de mesure, qui mesurent la déformation du ressort de mesure (4), la surface de dérivation de force (8) étant radialement intérieure par rapport au point de serrage (2) du ressort de mesure (4) sur le corps d'appui (5), et la surface de dérivation de force (8) étant prévue dans la zone radiale, dans laquelle s'effectue le changement de signe du moment de flexion du ressort de mesure (4).

2. Dispositif de mesure de force selon la revendication 1, dans lequel le côté intérieur du corps d'appui (5) présente un détalonnage conique.

3. Dispositif de mesure de force selon l'une des revendications précédentes, dans lequel la surface de dérivation de force est un épaulement (8) annulaire.

4. Dispositif de mesure de force selon l'une des revendications précédentes, dans lequel le ressort de mesure (4) est pourvu d'une rainure annulaire (7) concentrique, sur son côté frontal tourné à l'opposé de la surface de dérivation de force (8).

5. Dispositif de mesure de force selon l'une des revendications précédentes, dans lequel les capteurs de valeurs de mesure sont situés sur le côté frontal (6), opposé à la rainure annulaire (7), du ressort de mesure (4).

6. Dispositif de mesure de force selon l'une des revendications précédentes, dans lequel les capteurs de valeurs de mesure sont des bandes de mesure d'allongement.
